# EUROPÄISCHE PATENTANMELDUNG

(11) **EP 4 835 332 A1**
(43) Veröffentlichungstag der Anmeldung: **04.11.2026**
(21) Anmeldenummer: 26174762.0
(22) Anmeldetag: 27.04.2026
(51) Int. Cl.: F16H 63/34

(54) **PARKSPERRENSYSTEM**

(30) Priorität: 28.04.2025 DE 102025116330
(71) Anmelder: MAGNA Powertrain GmbH & Co KG, 8502 Lannach (AT)
(72) Erfinder: STEINWENDER, Herbert, 8144 Haselsdorf-Tobelbad (AT); KOGLER, Lukas, 8046 Graz (AT); KLAPF, Thomas, 8795 Radmer (AT); ROIS, Kristian, 8130 Frohnleiten (AT); PICHSENMEISTER, Philipp, 8054 Graz (AT); FRIEDRICH, Maria, 8430 Leibnitz (AT)
(74) Vertreter: Maikowski & Ninnemann Patentanwälte Partnerschaft mbB

(57) **Zusammenfassung**

Die Erfindung betrifft ein Parksperrensystem (1) mit einer Parksperre (10), einer Aktuatoreinheit (20) und zumindest einer Antriebswelle einer Antriebsanordnung für ein elektrisch angetriebenes Fahrzeug, wobei das Parksperrensystem ein Gehäuse (4) aufweist und wobei die Aktuatoreinheit (20) eine Steuerscheibe (24) und einen Aktuator (22) umfasst, die Steuerscheibe (24) mit einer Sperrkontur (29) ausgebildet ist, und wobei die Steuerscheibe verdrehbar in dem Gehäuse (4) gelagert ist, und wobei die Parksperre (10) eine Sperrhülse (30) umfasst, die verdrehsicher an dem Gehäuse (4) angebunden ist und konzentrisch zu der Antriebswelle angeordnet ist, wobei die Sperrhülse (30) axial verschiebbar in Bezug auf die Steuerscheibe (24) angeordnet ist, und wobei eine Gegensperrkontur (33) an Sperrhülse (30) ausgebildet ist, wobei die Parksperre (10) eine formschlüssige Wellenkupplung (40) umfasst und wobei der Aktuator (22) zum Verdrehen der Steuerscheibe (24) zumindest in eine erste Funktionsstellung ausgebildet ist, wobei in der ersten Funktionsstellung die Sperrhülse (30) mittels Gegensperrkontur (33) formschlüssig in die Sperrkontur (29) der Steuerscheibe (24) eingreift, wodurch die Sperrhülse (30) axial in die verriegelte Stellung der Parksperre (10) und Herstellung einer drehfesten Verbindung zwischen Sperrhülse (30) und Antriebswelle zur Herstellung einer Immobilisierung des Fahrzeugs verschoben wird.

## Beschreibung

Die Erfindung betrifft ein Parksperrensystem für ein elektrisch angetriebenes Fahrzeug, wobei eine Achse der Antriebsbaugruppe des Fahrzeugs über die Parksperre in ihrer Drehbewegung blockierbar ist.

### Stand der Technik

Bei Kraftfahrzeug-Antriebsanordnungen mit einem Verbrennungsmotor und Automatikgetriebe sowie bei Kraftfahrzeug-Antriebsanordnungen mit einer elektrischen Maschine (Elektro- oder Hybridantrieb) kommen Parksperren zum Einsatz, um ein unbeabsichtigtes Wegrollen des Kraftfahrzeugs zu jeder Zeit und an jedem Ort auszuschließen.

Derartige Parksperren sind üblicherweise Bestandteil eines Getriebes des Kraftfahrzeugs und weisen ein mit einer Getriebeausgangswelle verbundenes Parksperrenrad auf, in dessen Verzahnung eine mit dem Gehäuse verbundene Sperrklinke formschlüssig eingreifen kann, um eine Parksperrenstellung einzurichten. In dieser Parksperrenstellung wird eine mechanische Verriegelung des Antriebsstrangs des Kraftfahrzeugs erreicht. Die Betätigung der Parksperre kann sowohl manuell über einen Wählhebel und einen hiermit verbundenen Seilzug oder ein Gestänge oder auch mittels eines Parksperrenaktuators erfolgen. Eine Betätigung einer Parksperrenanordnung durch einen Parksperrenaktuator wird auch als "park by wire" bezeichnet.

Parksperren dieser Art sind beispielsweise aus der EP 3 067 591 B1 bekannt. Diese Parksperre weist einen Arretieraktuator auf, der über eine Hebelanordnung mit einem Betätigungsglied gekoppelt ist. Die Aktuierung erfolgt dabei mit einem elektrischen Versteller.

Eine Anforderung an das Parksperrensystem ist, dass die Sperrklinke der Parksperre sowohl unter Differenzdrehzahl von ~ 8km/h Fahrgeschwindigkeit (ratschend) eingelegt bzw. im geparkten Zustand des Fahrzeugs am Hang, bei durch das Eigengewicht des Fahrzeuges vorgespannten Antriebsstrangs, gelöst werden kann. Diese Forderungen sind der Grund für die robuste Gestaltung der Sperrklinke und des Parksperrenrades, sowie des leistungsstarken und baulich großen Aktuatormotors und der benötigten hohen Übersetzung im Getriebe. Zusätzlich darf die Parksperre weder ungewollt während der Fahrt des Fahrzeugs einrasten oder sich ungewollt im abgestellten Zustand lösen.

Ein hinsichtlich Gewichts und Baugröße optimiertes Parksperrensystem ist aus der DE 10 2020 121 495 B4 bekannt. Diese Parksperre umfasst ein getriebewellenfesten Parksperrenrad, wobei das Parksperrenrad eine Vielzahl von Zähnen und Zahnlücken als radiale Aussparungen aufweist. Die radialen Aussparungen nehmen im gesperrten Zustand der Parksperre Sperrelemente auf, die in die radialen Aussparungen formschlüssig eingreifen. Die Sperrelemente sind in einem Trägerkörper gehalten, der das Parksperrenrad radial umgibt. Die Aktuierung der Parksperre erfolgt über einen ringförmigen Aktuator, der über eine Axialbewegung die über den Umfang des Parksperrenrads verteilt angeordneten Sperrelemente in den gesperrten Zustand und wieder zurück in den entsperrten Zustand verstellt. Durch diese Ausführung des Aktuators, der koaxial zum Parksperrenrad angeordnet ist, wird eine kompakte Bauform der Parksperre erreicht.

Es ist Aufgabe der Erfindung, ein aus dem Stand der Technik bekanntes Parksperrensystem, insbesondere für ein elektrisch angetriebenes Fahrzeug hinsichtlich Baugröße, Gewicht und Kostenaufwand zu verbessern.

Diese Aufgabe wird durch die Merkmale des Anspruch 1 gelöst.

Durch die erfindungsgemäße Ausgestaltung des Parksperrensystems kann eine kompakte Baueinheit erzielt werden. Die erfindungsgemäße Ausgestaltung erlaubt eine variable Anordnung der Parksperre im Kraftfluss zwischen elektrischer Maschine der Antriebsanordnung und Antriebswelle der Räder des Fahrzeugs. Als Einbauposition kann die Getriebeausgangswelle der Getriebeeinheit, die Zwischenwelle der Getriebeeinheit oder die Rotorwelle dienen.

Die Ausführung der Parksperre als konzentrische Wellenverbindung die als formschlüssige Verbindung ausgeführt wird und vorzugsweise eine Klauenverbindung oder Steckverbindung ist, kann eine gleichmäßige Krafteinleitung und Kraftaufnahme beim Einlegen der Parksperre erreicht und eine kompakte Bauform erzielt werden.

Die übliche Ausgestaltung eines auf einer Getriebeausgangswelle angeordneten Parksperrenzahnrads und einer Sperrklinke zur gehäusefesten Festlegung des Parksperrenzahnrads bzw. der Getriebeausgangswelle wird durch eine einfache formschlüssige axial betätigbare Wellenkupplung ersetzt. Hierbei wird die konzentrische Verbindung mittels zweier Kupplungshälften ausgebildet, wobei jede Kupplungshälfte entsprechende über den Umfang verteilt angeordnete Formschlusselemente wie Zähne, Klauen umfasst, die in korrespondierende Zahnlücken, Nuten im gekoppelten Zustand eingreifen.

Die Parksperre hat eine entriegelte Stellung. In dieser entriegelten Stellung kann ein mittels der elektrischen Maschine erzeugtes Drehmoment im Kraftfluss über eine Getriebeeinheit auf die Antriebswelle der Räder übertragen werden, so dass ein normaler Betrieb des Elektrofahrzeugs möglich ist.

Des Weiteren hat die Parksperre eine verriegelte Stellung. In der verriegelten Stellung ist das Fahrzeug immobilisiert. Eine Antriebswelle oder Getriebeausgangswelle oder Zwischenwelle des Antriebsstrangs ist dabei drehfest gegen ein Gehäuse festgelegt.

Die Verstellung der Parksperre ausgehend von einer entriegelten Stellung in die verriegelte Stellung erfolgt über eine axiale Verstellung einer der beiden Kupplungshälften.

Die axiale Verstellung erfolgt dabei über eine Verdrehung einer Steuerscheibe, die eine Sperrkontur aufweist, die wirkverbunden mit einer Gegensperrkontur einer axial verschieblichen Sperrhülse ist, wobei die Sperrhülse mit einer der beiden Kupplungshälften verbunden ist.

Die axiale Verstellung erfolgt alternativ über eine Verdrehung einer Steuerscheibe, die mit einer Rampenkontur mit Axialrampen ausgeführt ist, die wirkverbunden mit Gegenkonturelementen, vorzugsweise in Form von gehäusefest angebundenen Bolzen sind.

Vorzugsweise ist die Parksperre an der Rotorwelle eingebunden verbaut. Bei einem Einbau der Parksperre an der Rotorwelle der elektrischen Maschine sind die auftretenden Momente am geringsten. Bei dieser Ausführungsform ist es vorteilhaft, wenn die Formschlusselemente direkt im Bereich der Stirnseite des Endbereichs der Rotorwelle ausgeführt sind. Diese Ausführung reduziert die Anzahl der Bauteile und führt zu einer kosteneffizienten Lösung.

Die Erfindung wird nachfolgend anhand der Zeichnungen und in unterschiedlichen Ausführungsformen näher beschrieben.

Es zeigt:
- Figur 1: eine Ausführungsform eines Parksperrensystems in einer ersten Funktionsstellung in der die Parksperre geöffnet ist (entriegelte Stellung) in einem Querschnitt mit einer Detailansicht im Bereich Sperrkontur / Gegensperrkontur in der geöffneten Stellung
- Figur 2: die Ausführungsform der Figur 1 in einer zweiten Funktionsstellung, in der die Parksperre weiterhin geöffnet ist mit einer Detailansicht im Bereich Sperrkontur / Gegensperrkontur in der weiteren Funktionsstellung
- Figur 3: die Ausführungsform der Figur 1 in einer dritten Funktionsstellung in der die Parksperre geschlossen ist (verriegelte Stellung) mit einer Detailansicht im Bereich Sperrkontur / Gegensperrkontur in der Funktionsstellung
- Figur 4: die Steuerscheibe und die Sperrhülse als Einzelbauteile in einer dreidimensionalen Darstellung
- Figur 5: die Steuerscheibe und die Sperrhülse als Einzelbauteile in einer dreidimensionalen Darstellung in einer weiteren Ansicht
- Figur 6: ein Zusammenbau der Steuerscheibe mit Sperrhülse in einer weiteren Ausführungsform
- Figur 7: eine schematische Schnittdarstellung der Steuerscheibe und Sperrhülse im Bereich der Sperrkontur und Gegensperrkontur mit Schaltkulisse für Zusatzaktuierung in einer ersten Schaltstellung
- Figur 8: eine schematische Schnittdarstellung der Steuerscheibe und Sperrhülse im Bereich der Sperrkontur und Gegensperrkontur mit Schaltkulisse für Zusatzaktuierung in einer zweiten Schaltstellung
- Figur 9: eine perspektivische Ansicht eines Parksperrensystems gemäß einer zweiten Ausführungsform
- Figur 10: eine Schnittdarstellung des Parksperrensystems gemäß Figur 9
- Figur 11: eine perspektivische Ansicht der Baueinheit Steuerscheibe, Sperrhülse, elastisches Element
- Figur 12: eine erste Ansicht der Baueinheit gemäß Figur 11
- Figur 13: eine Seitenansicht der Baueinheit gemäß Figur 11
- Figur 14: eine zweite Ansicht der Baueinheit gemäß Figur 11
- Figur 15: eine Ansicht des Parksperrensystems gemäß der zweiten Ausführungsform
- Figur 16: eine Schnittdarstellung des Parksperrensystems gemäß der zweiten Ausführungsform

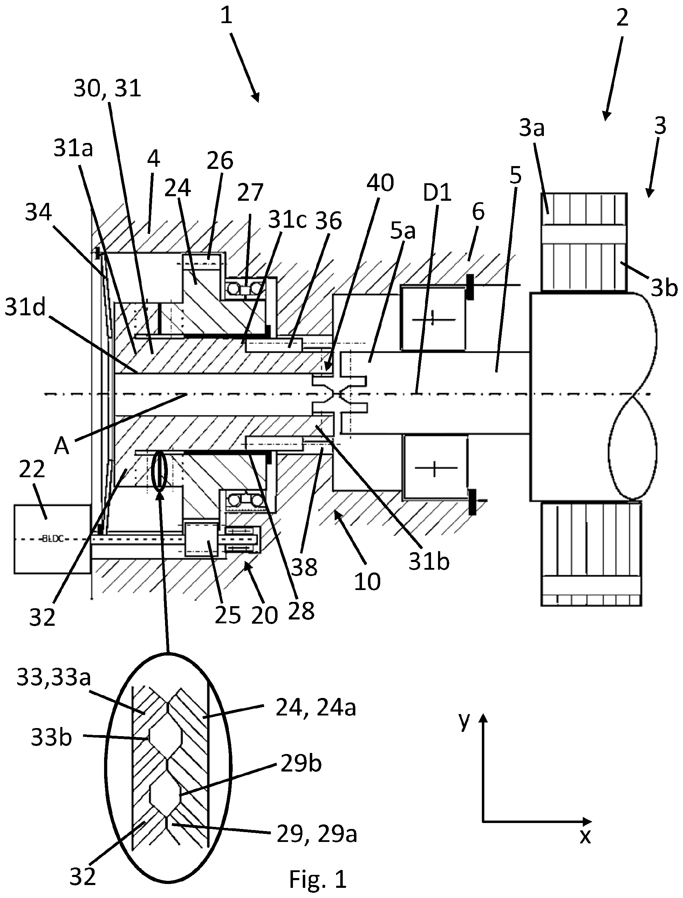

Figur 1 zeigt ein Parksperrensystem 1 mit einer Parksperre 10, einer Aktuatoreinheit 20 und einem Ausschnitt einer Antriebsanordnung 2 für ein elektrisch angetriebenes Fahrzeug, wobei die Antriebsanordnung 2 vorgesehen ist, ein Drehmoment für den Antrieb der Räder aufzubringen. Die Antriebsanordnung 2 umfasst eine elektrische Maschine 3 mit einer Getriebeeinheit, die in einem gemeinsamen Gehäuse 4 verbaut sind. Des Weiteren ist die Parksperre 10 in dem Gehäuse 4 verbaut.

Die elektrische Maschine 3 weist einen gehäusefest angeordneten Stator 3a und einen bezüglich des Stators 3a um eine Drehachse D1 drehbar gelagerten Rotor 3b auf. Der Rotor 3b ist auf einer Rotorwelle 5 drehfest angeordnet. Die Rotorwelle 5 weist einen ersten Endbereich 5a und einen zweiten Endbereich (nicht dargestellt) auf. Der erste Endbereich 5a des Rotors 3b ist über ein Wellenlager 6 in dem Gehäuse 4 drehbar gelagert. Nicht dargestellt ist die Getriebeeinheit, die im Kraftfluss zwischen elektrischer Maschine 3 und Antriebswelle für die Räder eingebunden ist. Die Getriebeeinheit umfasst üblicherweise ein Zwischenwellenzahnrad einer Zwischenwelle, die mit einem Zahnrad des zweiten Endabschnitts der Rotorwelle kämmt. Das Zwischenwellenzahnrad wiederum kämmt mit einem Differentialstirnrad der Getriebeeinheit. Das Differentialstirnrad weist eine Getriebeausgangswelle auf, die das Drehmoment auf die Antriebswelle für den Antrieb der Räder überträgt.

Das Parksperrensystem 1 ist, wie bereits obenstehend beschrieben, in dem Gehäuse 4 eingebaut und umfasst im Wesentlichen die Parksperre 10 mit Sperrhülse 30 und die Aktuatoreinheit 20.

Die Sperrhülse 30 ist verdrehsicher und axial verschieblich in dem Gehäuse 4 gelagert. Die Axialrichtung ist durch die x-Richtung des dargestellten Koordinatensystems gekennzeichnet. Die Sperrhülse 30 weist einen hohlzylindrischen Grundkörper 31 mit in axialer Richtung gesehen ersten und einem gegenüberliegenden zweiten Endbereich 31a, 31b auf. Der Grundkörper weist eine äußere Mantelfläche 31c und eine innere Mantelfläche 31d auf. Die Sperrhülse 30 hat eine in x-Richtung verlaufende Axialachse A, die zu der Drehachse D1 der Rotorwelle 5 fluchtend verlaufend ausgerichtet ist, wodurch die Sperrhülse 30 koaxial zur Rotorwelle 5 ist.

Wie es aus der Figur 1 zu ersehen ist, sind die Sperrhülse 30 am zweiten Endbereich 31b axial beabstandet zu dem ersten Endbereich 5a der Rotorwelle 5 angeordnet.

An dem ersten Endbereich 31a des Grundkörpers 31 ist ein ringförmiger radial sich erstreckender Flansch 32 angeformt, der stirnseitig eine Sperrkontur 33 aufweist. Die Sperrkontur 33 umfasst eine Vielzahl von Rampen 33a, die gleichmäßig über den Umfang der Stirnseite auf einer Kreislinie angeordnet sind. Zwischen den Rampen 33a die sich in Axialrichtung parallel zur Axialachse erstrecken bilden sich entsprechende Vertiefungen 33ba aus. Die Rampen 33a sind trapezförmig ausgeformt. Das gezeigte Ausführungsbeispiel weist drei Rampen 33a auf.

Auf der gegenüberliegenden zweiten Stirnseite des Flanschs 32 ist die Sperrhülse 30 über ein elastisches Element 34 federvorgespannt in axialer Richtung an dem Gehäuse 4 abgestützt gehalten. Das elastische Element 34 ist in dem gezeigten Ausführungsbeispiel eine Tellerfeder. Die Ausführung der Federvorspannung wird nachfolgend anhand der unterschiedlichen Funktionsstellungen näher erläutert.

Die Verdrehsicherung und axiale Verschiebbarkeit der Sperrhülse 30 in dem Gehäuse 4 wird über eine Verzahnung 36 erreicht, die zumindest in einem Teilbereich der äußeren Mantelfläche 31c der eingebracht ist. Die Verzahnung 36 greift in eine korrespondierende Verzahnung 38 in dem Gehäuse 4 ein.

Die Aktuatoreinheit 20 die zur Betätigung der Parksperre 10 von der entriegelten Stellung in die verriegelte Stellung und vice versa vorgesehen ist, umfasst einen Aktuator 22 und eine Steuerscheibe 24. Der Aktuator 22 ist ein Elektromotor, vorzugsweise ein BLDC-Motor, der über ein auf seiner Motorwelle drehfest angeordnetem Ritzel 25 kämmend in eine Außenverzahnung 26 der Steuerscheibe 24 eingreift und dieses bei einer Aktuierung verdreht.

Die Steuerscheibe 24 ist mittels einer Lageranordnung 27 verdrehbar in dem Gehäuse 4 koaxial zu der Sperrhülse 30 gelagert. Die Steuerscheibe 24 weist mittig eine Durchgangsbohrung auf, die derart dimensioniert ist, dass die Sperrhülse 30 durch die Steuerscheibe 24 durchgesteckt werden kann und in dieser gleitend geführt ist. Hierfür ist zwischen Sperrhülse 30 und Steuerscheibe 24 eine Gleitlagerbuche 28 angeordnet.

Im Bereich einer ersten Stirnseite 24a der Steuerscheibe 24 ist eine Sperrkontur 29 integriert. Die Sperrkontur 29 umfasst eine Vielzahl von Rampen 29a, die gleichmäßig über den Umfang der Stirnseite 24a auf einer Kreislinie angeordnet sind. Zwischen den Rampen 29a die sich in Axialrichtung parallel zur Axialachse erstrecken bilden sich entsprechende Vertiefungen 29b aus. Die Rampen 29a sind trapezförmig ausgeformt. Das gezeigte Ausführungsbeispiel weist drei Rampen 29a auf. Die Sperrkontur 29 der Steuerscheibe 24 ist korrespondierend zu der Sperrkontur 33 der Sperrhülse 30 ausgeführt.

Die Steuerscheibe 24 mit der Außenverzahnung 26 und den Sperrkontur 29 wird bevorzugt aus Sintermetall oder Kunststoff hergestellt.

Die Parksperre 10 umfasst des Weiteren eine formschlüssige Wellenkupplung 40 die in dem Ausführungsbeispiel als Klauenkupplung 40 ausgeführt ist und eine erste und eine zweite Kupplungshälfte 40a, 40b aufweist. Die Kupplungshälften 40a, 40b sind drehfest auf den jeweiligen benachbarten Wellenenden angeordnet und auf ihren einander zugewandten Stirnseiten mit Klauen versehen, die achsparallel angeordnet und gleichmäßig über den Umfang der Stirnseiten der Kupplungshälften 40a, 40b verteilt sind. Gemäß des Ausführungsbeispiels ist die erste Kupplungshälfte 40a am ersten Endbereich 5a der Rotorwelle 5 und die zweite Kupplungshälfte 40b am zweiten Endbereich 30b der Sperrhülse angebunden. Im eingekoppelten Zustand, der der verriegelten Stellung der Parksperre 10 entspricht, greifen die Klauen der beiden Kupplungshälften 40a, 40b wechselseitig ineinander ein und bilden eine formschlüssige Verbindung zwischen Rotorwelle 5 und gehäusefest angebundener Sperrhülse 30.

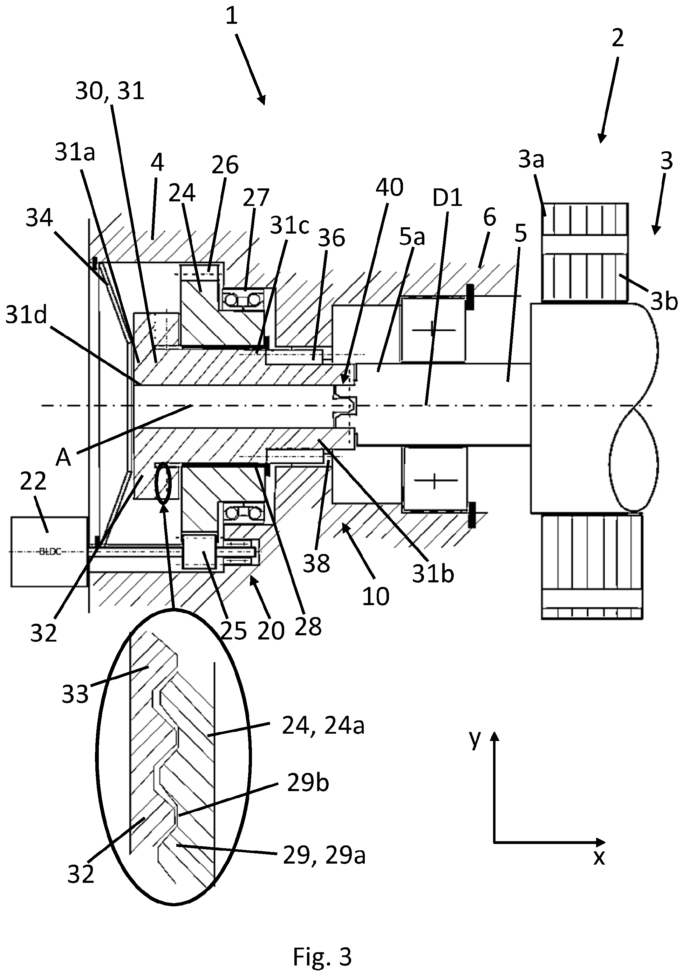

Diese verriegelte Stellung ist in der Figur 3 gezeigt und wird durch eine entsprechende Aktuierung der Steuerscheibe 24 wie nachfolgend beschrieben erzielt.

In der in Figur 1 gezeigten Funktionsstellung der Aktuatoreinheit bzw. der Steuerscheibe 24 stehen sich die Rampen 29a, 33a der Steuerscheibe 24 und der Sperrhülse 30 axial gegenüber und es ist kein formschlüssiger Eingriff zwischen Steuerscheibe 24 und Sperrhülse 30 möglich. In dieser Funktionsstellung besteht ein maximaler axialer Abstand zwischen erstem Endbereich 5a der Rotorwelle 5 und zweitem Endbereich 31b der Sperrhülse. Die Parksperre ist in der entriegelten Position. Die Sperrhülse 30 ist über die Tellerfeder axial in Richtung auf die Rotorwelle 5 hin vorgespannt gehalten.

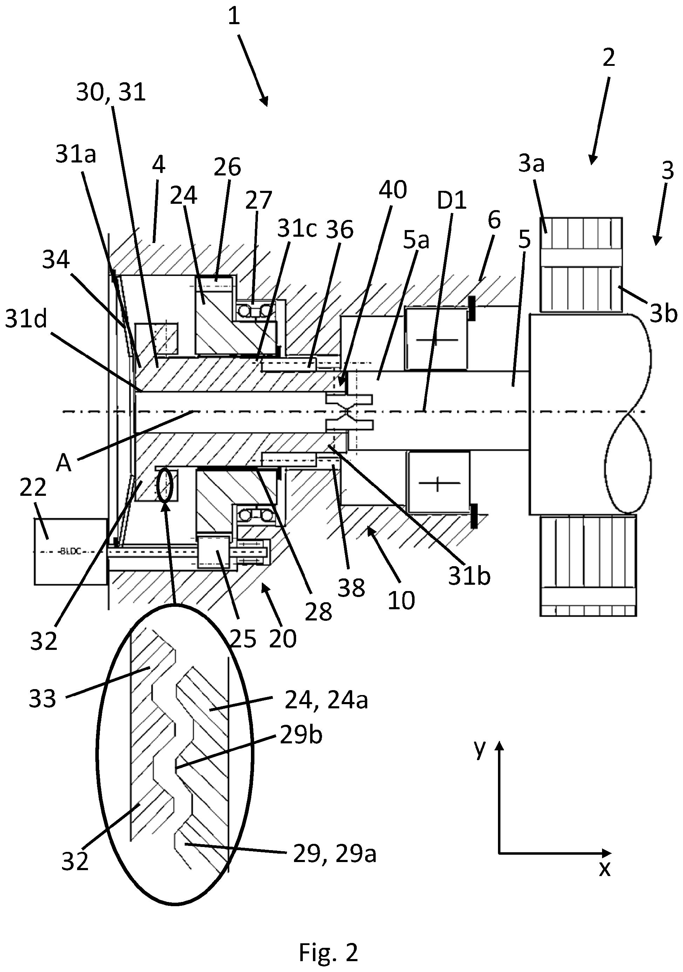

Bei einer Verdrehung des Steuerscheibe in eine in Figur 2 gezeigte Funktionsstellung, wird die Steuerscheibe 24 mit Sperrkontur 29 derart über den Elektromotor verdreht, dass die im Detail der Figur 2 gezeigte Position der gegenüberliegenden Rampen 29a, 33a erreicht wird. In dieser Position stehen die Rampen 29a, 33a axial gegenüberliegend zu Vertiefungen 33b bzw. 29b, so dass die Sperrkontur 33 formschlüssig in die Sperrkontur 29 eingreifen kann.

Durch die Federvorspannung der Tellerfeder 34 wird die Sperrhülse 30 axial in Richtung auf die Rotorwelle 5 verschoben, wodurch der formschlüssige Eingriff zwischen den Sperrkonturen 29, 33 hergestellt wird. Die axiale Verschiebung der Sperrhülse gemäß der Darstellung der Figur 3 führt somit zu einem formschlüssigen Eingriff der Kupplungshälften der Klauenkupplung 40. Die Parksperre 10 befindet sich in der verriegelten Stellung.

Wie zuvor beschrieben, dient das elastische Element 34, vorzugsweise die Tellerfeder beim Einlegen der Parksperre zum axialen Verschieben der Sperrhülse 30 in Richtung auf die Rotorwelle 5. Das elastische Element 34 dient aber auch als Federspeicher, wenn es im Zuge des Einlegens zu einer Zahn/Zahn Stellung der Wellenkupplung 40 kommt, wobei der Aktuator 22 die Sperrkontur ungehindert weiter in seine Endposition der Rampe zurückdrehen kann. Der Federspeicher bringt die Sperrhülse 30 automatisch mit der Rotorwelle 5 in Eingriff, wenn die Zahn-Zahnstellung in eine Zahn-Lückenposition der Kupplungshälften 40a, 40b wechselt und ermöglicht somit bei kleinen Geschwindigkeiten ein automatisches Einlegen der Parksperre 10 ohne weitere die Hilfe des Aktuatormotors. Auch Ratschen bei höheren Geschwindigkeiten ist durch den Federspeicher möglich.

Durch die beiden abgeflachten Sperrkonturen 29, 33 bei den Endpositionen der Sperrhülse (Parksperre offen und Parksperre eingelegt) wird die Steuerscheibe 24 stromlos in ihrer Position stabil gehalten und kann durch eine Kugelraste die in die Steuerscheibe eingreift zusätzlich gegen Vibrationen von außen, gegen ungewolltes verdrehen, gesichert werden.

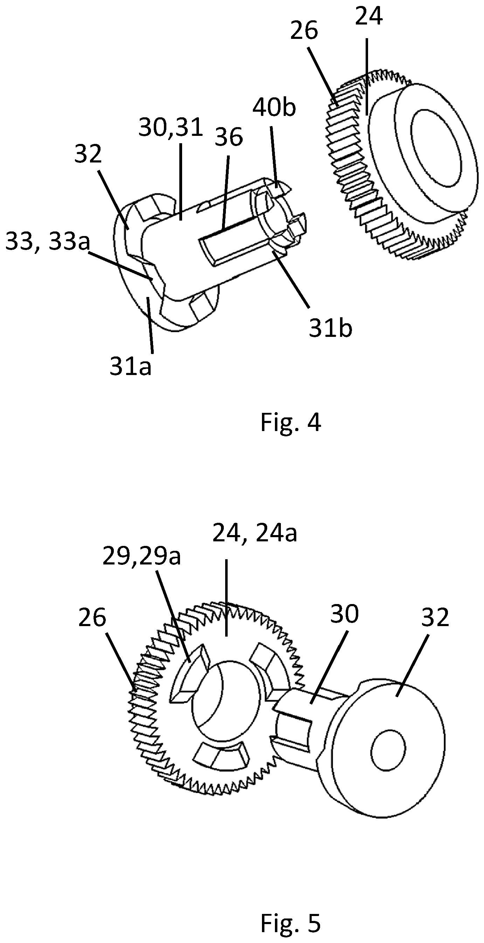

Die Figuren 4 und 5 zeigen die Sperrhülse 30 sowie die Steuerscheibe 24 in einer Nicht montierten Situation als Einzelbauteile.

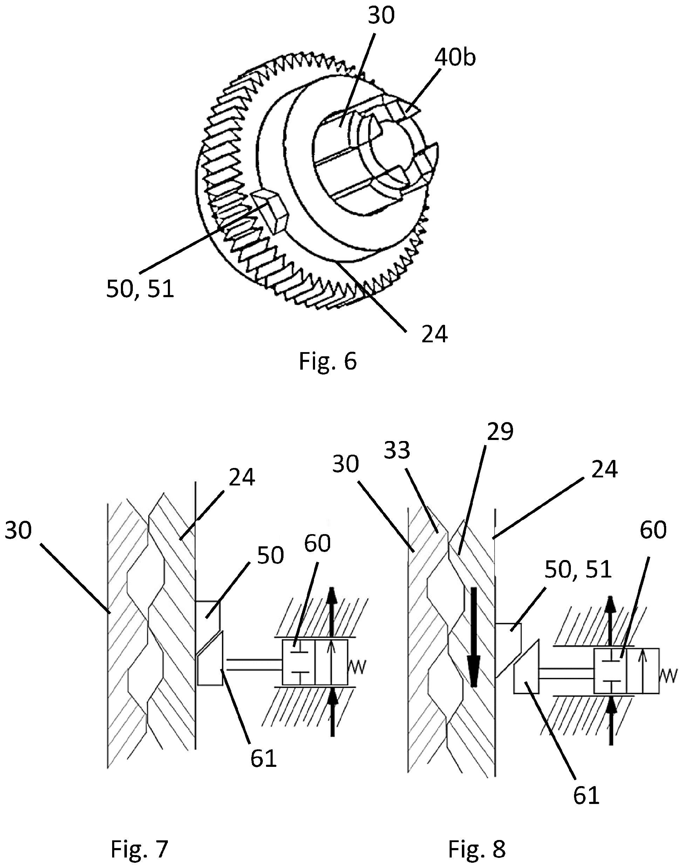

Die Figuren 6, 7 und 8 zeigen eine weitere Ausführungsform des Parksperrensystems mit einer Schaltkulisse 50 für eine Zusatzaktuierung. Diese Zusatzaktuierung kann in der entriegelten Stellung der Parksperre (normaler Fahrbetrieb) erfolgen.

In dieser entriegelten Stellung der Parksperre 10 (Figur 1) kann der als BLDC-Motor ausgeführte Aktuator 22 um einen zusätzlichen Drehwinkel weiter verdreht werden, ohne dass ein Schaltvorgang (Formschluss der Kupplungshälften 40a, 40b) der Parksperre 10 erfolgt.

Innerhalb dieses Verdrehwinkelbereichs ist auf der der Sperrkontur 29 der Steuerscheibe gegenüberliegenden Stirnseite eine Schaltkulisse 50 in Form einer Schaltrampe 51 ausgeführt.

Diese Schaltrampe 51 kann somit in der entriegelten Position, die dem Fahrmodus "Drive" entspricht, eine weitere Funktion ansteuern. Diese weitere Funktion ist die Ansteuerung eines hydraulischen Ventils 60 im Kühlreislauf der Antriebsanordnung. Das hydraulische Ventil 60 ist in dem gezeigten Ausführungsbeispiel ein 2/2 Wegeventil und schaltet in der in Figur 7 gezeigten Schaltstellung einen Durchfluss. In der in Figur 8 gezeigten Stellung ist der Durchfluss gesperrt. Das Schalten des hydraulischen Ventils 60 erfolgt über eine Gegenschaltrampe 61 die in entsprechender Verdrehwinkelposition mit der Schaltrampe 51 zusammenwirkt und eine Verstellung de hydraulischen Ventils 60 in die Durchflussstellung bewirkt.

Somit können auch 2 oder noch mehr Funktionen mit nur einem Aktuator-Motor integriert und angesteuert werden, was in einem Gesamtsystem einer eAchse ein zusätzliches Kostenpotential ergibt.

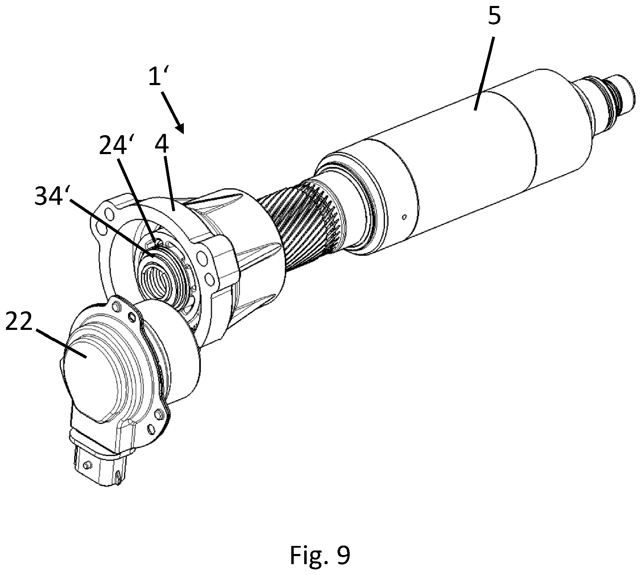

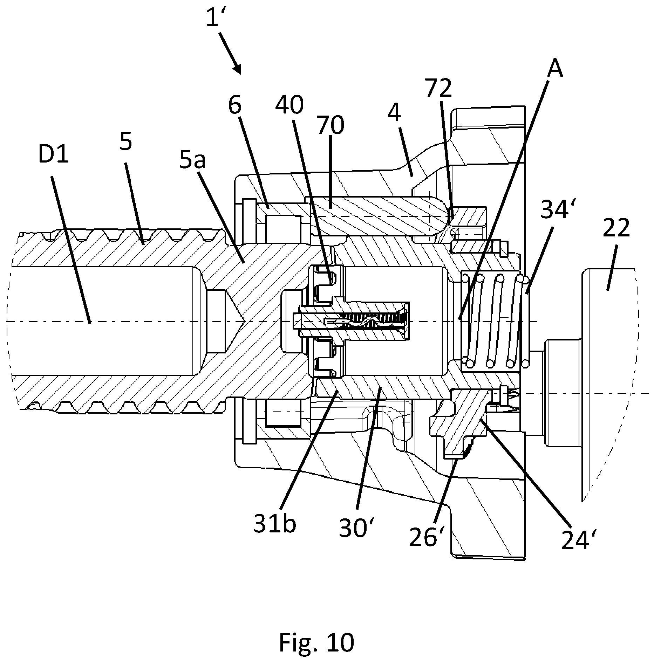

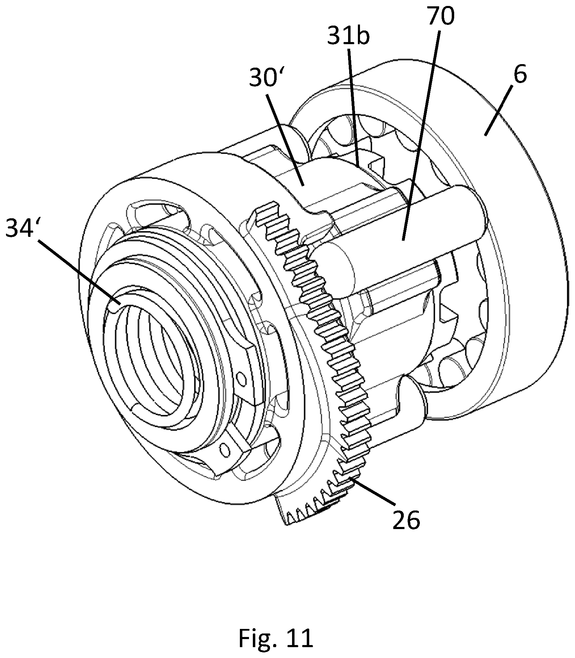

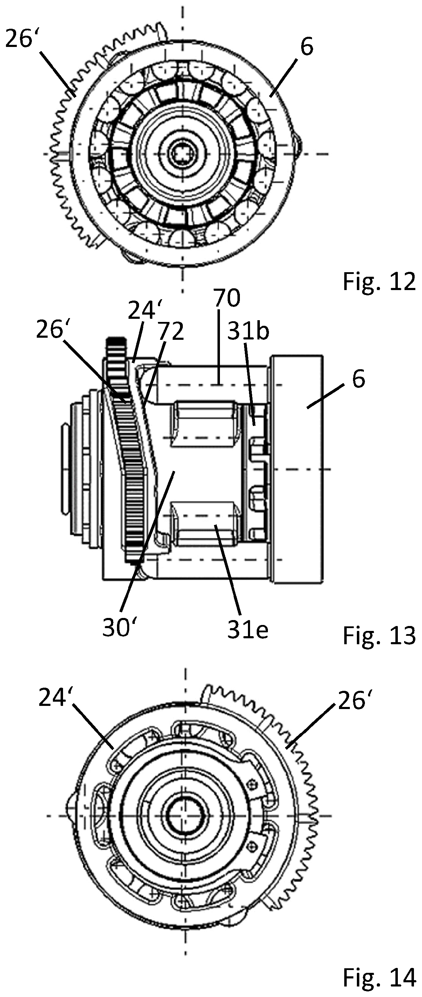

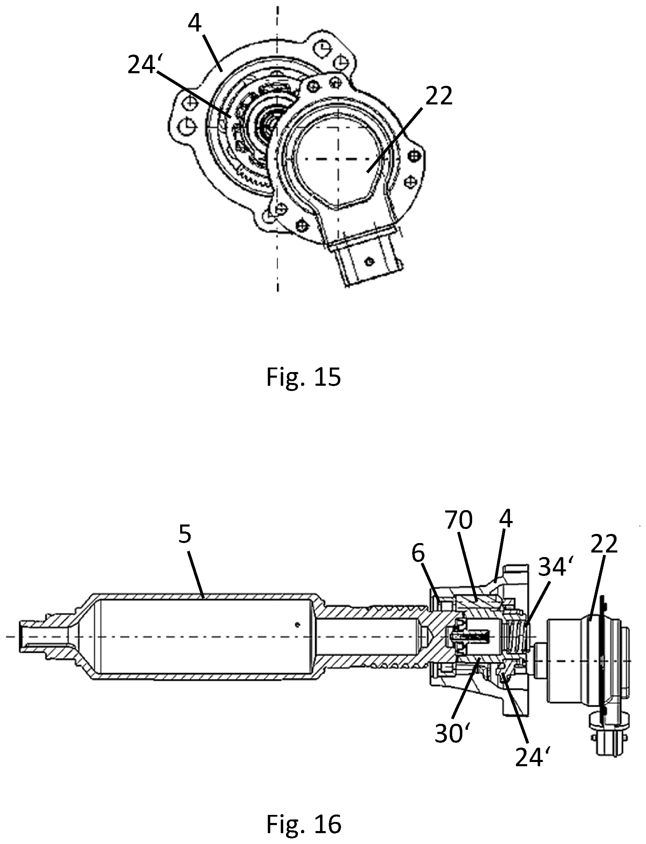

Die Figuren 9 - 16 zeigen eine weitere Ausführungsform eines Parksperrensystems 1', welches nachfolgend beschrieben wird.

Gleiche zuvor bereits beschriebene Bauteile sind mit gleichen Bezugszeichen versehen.

Das Parksperrensystem 1' ist, wie bereits obenstehend beschrieben, in dem Gehäuse 4 eingebaut und umfasst im Wesentlichen die Parksperre 10 mit Sperrhülse 30' und die Aktuatoreinheit 20.

Die Sperrhülse 30' ist verdrehsicher und axial verschieblich in dem Gehäuse 4 gelagert. Die Axialrichtung ist durch die x-Richtung des dargestellten Koordinatensystems gekennzeichnet. Die Sperrhülse 30' weist einen Grundkörper 31' mit in axialer Richtung gesehen ersten und einem gegenüberliegenden zweiten Endbereich 31a, 31b auf. Der Grundkörper weist eine äußere Mantelfläche 31c auf. Die Sperrhülse 30' hat eine in x-Richtung verlaufende Axialachse A, die zu der Drehachse D1 der Rotorwelle 5 fluchtend verlaufend ausgerichtet ist, wodurch die Sperrhülse 30' koaxial zur Rotorwelle 5 angeordnet ist.

Auf der Stirnseite des ersten Endbereichs 31a ist die Sperrhülse 30' über ein elastisches Element 34 federvorgespannt in axialer Richtung an dem Gehäuse 4 oder einem gehäusefesten Element abgestützt gehalten. Das elastische Element 34 ist in dem gezeigten Ausführungsbeispiel eine Druckfeder.

An der inneren Mantelfläche des Gehäuses 4 sind über den Umfang verteilt drei gehäusefest angebundene Gegenkonturelemente angeordnet. Diese Gegenkonturelemente sind als Bolzen 70 ausgeführt. Die Bolzen 70 weisen eine Axialachse und an einem axialen Ende einen abgerundeten Endbereich 70a auf. Die Axialachsen der Bolzen 70 sind parallel zu der Axialachse A der Sperrhülse ausgerichtet.

Zur Verdrehsicherung und axialen Verschiebbarkeit der Sperrhülse 30' in dem Gehäuse 4 sind an der äußeren Mantelfläche der Sperrhülse 30' über den Umfang verteilt axial verlaufende Führungselemente 31e angeformt. Die Bolzen 70 sind zwischen einem Paar von Führungselementen 31e gehalten.

Die Aktuatoreinheit 20 die zur Betätigung der Parksperre 10 von der entriegelten Stellung in die verriegelte Stellung und vice versa vorgesehen ist, umfasst einen Aktuator 22 und eine Steuerscheibe 24'. Der Aktuator 22 ist ein Elektromotor, vorzugsweise ein BLDC-Motor, der über ein auf seiner Motorwelle drehfest angeordnetem Ritzel kämmend mittelbar oder unmittelbar in eine Außenverzahnung 26' der Steuerscheibe 24' eingreift und dieses bei einer Aktuierung verdreht. Die Außenverzahnung 26' ist bei dem gezeigten Ausführungsbeispiel nur über einen Teilbereich des Außenumfangs der Steuerscheibe 24' ausgeführt.

Die Steuerscheibe 24' ist mittels einer Lageranordnung verdrehbar in dem Gehäuse 4 koaxial zu der Sperrhülse 30' gelagert. Die Steuerscheibe 24' weist mittig eine Durchgangsbohrung auf, die derart dimensioniert ist, dass die Sperrhülse 30' durch die Steuerscheibe 24' durchgesteckt werden kann. Die Steuerscheibe 24' ist axial verschiebbar gesichert auf der Sperrhülse 30' angebunden gehalten.

Im Bereich einer ersten Stirnseite 24a der Steuerscheibe 24' ist eine Rampenkontur integriert. Die Rampenkontur umfasst in dem gezeigten Ausführungsbeispiel drei Axialrampen 72, die gleichmäßig über den Umfang der Stirnseite 24a angeordnet und den Bolzen 70 korrespondierend zugeordnet sind. Die Axialrampen 72 sind linear verlaufend ausgeführt. Die Bolzen 70 liegen mittels ihrer Endbereiche 70a auf den zugeordneten Axialrampen 72 an.

Die Parksperre 10 umfasst des Weiteren, wie bereits zu dem ersten Ausführungsbeispiel beschrieben ist eine formschlüssige Wellenkupplung 40 die in dem Ausführungsbeispiel als Klauenkupplung 40 ausgeführt ist.

Bei einer Verdrehung der Steuerscheibe 24' mittels des Aktuators in eine Funktionsstellung gleiten die Bolzen mittels ihrer Endbereiche an den korrespondierenden Rampenkonturen, wodurch eine entsprechende Verschiebung der Sperrhülse 30' in Axialrichtung erreicht wird.

Durch diese Verstellung in die erste und zweite Funktionsstellung wird ein Verstellen der Klauenkupplung 40 in die verriegelte bzw. entriegelte Stellung erreicht. In der verriegelten Stellung wird eine Immobilisierung des Fahrzeugs über einen Kraftschluss zwischen Rotorwelle 5, Sperrhülse 30', Bolzen 70 und Gehäuse 4 erreicht.

### Bezugszeichenliste

- 1, 1': Parksperrensystem
- 2: Antriebsanordnung
- 3: elektrische Maschine
- 3a: Stator
- 3b: Rotor
- 4 5: Gehäuse
- 6: Wellenlager
- 5a: erster Endbereich
- 10: Parksperre
- 20: Aktuatoreinheit
- 22: Aktuator
- 24, 24': Steuerscheibe
- 25: Ritzel
- 26: Außenverzahnung
- 27: Lageranordnung
- 28: Gleitlagerbuchse
- 29: Sperrkontur
- 29a: Rampen
- 29b: Vertiefungen
- 30, 30': Sperrhülse
- 31, 31': Grundkörper
- 31a: erster Endbereich
- 31b: zweiter Endbereich
- 31c: äußere Mantelfläche
- 31d: innere Mantelfläche
- 31e: Axialführungselemente
- 32: Flansch
- 33: Sperrkontur
- 33a: Rampen
- 33b: Vertiefungen
- 34, 34': elastisches Element
- 36 38: Verzahnung
- 40: formschlüssige Wellenkupplung / Klauenkupplung
- 50: Schaltkulisse
- 51: Schaltrampe
- 60: Ventil
- 61: Gegenschaltrampe

- 70: Bolzen
- 70a: Endbereich
- 72: Axialrampe

## Patentansprüche

1. Parksperrensystem (1) mit einer Parksperre (10), einer Aktuatoreinheit (20) und zumindest einer Antriebswelle einer Antriebsanordnung für ein elektrisch angetriebenes Fahrzeug, wobei
• das Parksperrensystem ein Gehäuse (4) aufweist und wobei
• die Aktuatoreinheit (20) eine Steuerscheibe (24) und einen Aktuator (22) umfasst,
• die Steuerscheibe (24) mit einer Sperrkontur (29) ausgebildet ist, und wobei die Steuerscheibe verdrehbar in dem Gehäuse (4) gelagert ist, und wobei
• die Parksperre (10) eine Sperrhülse (30) umfasst, die verdrehsicher an dem Gehäuse (4) angebunden ist und konzentrisch zu der Antriebswelle angeordnet ist, wobei die Sperrhülse (30) axial verschiebbar in Bezug auf die Steuerscheibe (24) angeordnet ist, und wobei
• eine Gegensperrkontur (33) an Sperrhülse (30) ausgebildet ist
• die Parksperre (10) eine formschlüssige Wellenkupplung (40) mit zwei Kupplungshälften (40a, 40b) umfasst, die in eine entriegelte und verriegelte Stellung axial verstellbar ist, und wobei
• die erste Kupplungshälfte (40b) an der Sperrhülse (30) und die zweite Kupplungshälfte (40a) an der Antriebswelle drehfest angeordnet ist, und wobei
• der Aktuator (22) zum Verdrehen der Steuerscheibe (24) zumindest in eine erste Funktionsstellung ausgebildet ist, wobei in der ersten Funktionsstellung die Sperrhülse (30) mittels Gegensperrkontur (33) formschlüssig in die Sperrkontur (29) der Steuerscheibe (24) eingreift, wodurch die Sperrhülse (30) axial in die verriegelte Stellung der Parksperre (10) und Herstellung einer drehfesten Verbindung zwischen Sperrhülse (30) und Antriebswelle zur Herstellung einer Immobilisierung des Fahrzeugs verschoben wird.

2. Parksperrensystem (1) nach Anspruch 1, **dadurch gekennzeichnet, dass** die Sperrhülse (30) an ihrem ersten Endbereich (31a) einen ringförmig radial sich erstreckenden Flansch (32) umfasst, der stirnseitig die Gegensperrkontur (33) aufweist, die aus mindestens einer Rampe, vorzugsweise einer Vielzahl von Rampen (29a), die gleichmäßig über den Umfang der Stirnseite (24a) angeordnet sind, gebildet wird.

3. Parksperrensystem (1) nach Anspruch 1 oder 2, **dadurch gekennzeichnet, dass** die Steuerscheibe (24) im Bereich einer ersten Stirnseite (24a) die Sperrkontur (29) mit mindestens einer Rampe, vorzugsweise einer Vielzahl von Rampen (29a) umfasst, die gleichmäßig über den Umfang der Stirnseite (24a) angeordnet sind.

4. Parksperrensystem (1) nach einem der vorhergehenden Ansprüche, **dadurch gekennzeichnet, dass** die Sperrhülse (30) über eine zylindrische Mantelfläche (31c) gleitend in einer Durchgangsbohrung der Steuerscheibe (24) geführt ist und die Steuerscheibe (24) koaxial zur Sperrhülse (30) angeordnet ist.

5. Parksperrensystem (1) nach einem der vorhergehenden Ansprüche, **dadurch gekennzeichnet, dass** eine Verdrehung der Steuerscheibe (24) mittels des Aktuators (22) über eine Außenverzahnung (26) der Steuerscheibe (24) die mit einem Wellenritzel (25) des Elektromotors, vorzugsweisen BLDC-Motors, mittelbar oder unmittelbar kämmend in Wirkverbindung steht.

6. Parksperrensystem (1) nach einem der vorangehenden Ansprüche, **dadurch gekennzeichnet, dass** die Steuerscheibe (24) für die Aktuierung einer Zusatzfunktion auf der der Sperrkontur (24) gegenüberliegenden Stirnseite eine Schaltkulisse in Form einer Schaltrampe (51) umfasst, die in einem festgelegten Verdrehwinkel ein Ventil (60) für einen Kühlkreislauf der Antriebsanordnung schaltet.

7. Parksperrensystem (1') mit einer Parksperre (10), einer Aktuatoreinheit (20) und zumindest einer Antriebswelle einer Antriebsanordnung für ein elektrisch angetriebenes Fahrzeug, wobei
• das Parksperrensystem ein Gehäuse (4) aufweist und wobei
• die Aktuatoreinheit (20) eine Steuerscheibe (24') und einen Aktuator (22) umfasst,
• die Steuerscheibe (24') mit einer Rampenkontur ausgebildet ist, und wobei die Steuerscheibe (24') verdrehbar in dem Gehäuse (4) gelagert ist, und wobei
• die Parksperre (10) eine Sperrhülse (30') umfasst, die verdrehsicher an dem Gehäuse (4) angebunden ist und konzentrisch zu der Antriebswelle angeordnet ist, wobei die Steuerscheibe (24') axial gesichert an der Sperrhülse (30') angeordnet ist, und wobei
• mindestens ein gehäusefest angeordnetes Gegenkonturelement ausgebildet ist
• die Parksperre (10) eine formschlüssige Wellenkupplung (40) mit zwei Kupplungshälften (40a, 40b) umfasst, die in eine entriegelte und verriegelte Stellung axial verstellbar ist, und wobei
• die erste Kupplungshälfte (40b) an der Sperrhülse (30') und die zweite Kupplungshälfte (40a) an der Antriebswelle drehfest angeordnet ist, und wobei
• der Aktuator (22) zum Verdrehen der Steuerscheibe (24') zumindest in eine erste Funktionsstellung ausgebildet ist, wobei in der ersten Funktionsstellung das mindestens eine gehäusefest angeordnete Gegenkonturelement mit der Rampenkontur der Steuerscheibe (24') zusammenwirkt, wodurch die Sperrhülse (30') axial in die verriegelte Stellung der Parksperre (10) und Herstellung einer drehfesten Verbindung zwischen Gehäuse (4) und Antriebswelle zur Herstellung einer Immobilisierung des Fahrzeugs verschoben wird.

8. Parksperrensystem (1, 1') nach einem der vorhergehenden Ansprüche, **dadurch gekennzeichnet, dass** die Antriebswelle eine Rotorwelle (5) eines Rotors einer elektrischen Maschine der Antriebsanordnung oder eine vorgelagerte Antriebswelle der elektrischen Maschine ist.

9. Parksperrensystem (1, 1') nach einem der vorhergehenden Ansprüche, **dadurch gekennzeichnet, dass** die formschlüssige Wellenkupplung (40) eine Klauenkupplung ist, und wobei die Kupplungshälften (40a, 40b) auf ihren einander zugewandten Stirnseiten mit Klauen versehen, die achsparallel angeordnet und gleichmäßig über den Umfang der Stirnseiten der Kupplungshälften (40a, 40b) verteilt sind.

10. Parksperrensystem (1, 1') nach einem der vorhergehenden Ansprüche, **dadurch gekennzeichnet, dass** das Parksperrensystem (10, 10') die Antriebsanordnung mit einer elektrische Maschine (3) umfasst, wobei die elektrische Maschine (3) einen gehäusefest angeordneten Stator (3a) und einen bezüglich des Stators (3a) um eine Drehachse D1 drehbar gelagerten Rotor (3b) aufweist, der auf einer Rotorwelle (5) drehfest angeordnet ist, und wobei die Antriebswelle die Rotorwelle (5) ist, wobei die zweite Kupplungshälfte (40a) stirnseitig angeordnet ist.

11. Parksperrensystem (1, 1') nach einem der vorhergehenden Ansprüche, **dadurch gekennzeichnet, dass** die Sperrhülse (30) in Axialrichtung einen ersten Endbereich (31a) und einen zweiten Endbereich (31b) aufweist, wobei stirnseitig an dem zweiten Endbereich (31b) die erste Kupplungshälfte (40b) ausgebildet ist.

12. Parksperrensystem (1') nach einem der Ansprüche 7-11, **dadurch gekennzeichnet, dass** das mindestens eine Gegenkonturelement als Bolzen (70) ausgeführt ist, wobei der mindestens eine Bolzen (70) axial verlaufend an dem Gehäuse (4) angebunden gehalten ist, wobei vorzugsweise drei Bolzen (70) über den Umfang der inneren Mantelfläche des Gehäuses (4) gehalten sind.

13. Parksperrensystem (1, 1') nach einem der vorhergehenden Ansprüche, **dadurch gekennzeichnet, dass** die Sperrhülse (30, 30') über ein elastisches Element (34, 34'), vorzugsweise eine Tellerfeder oder eine Druckfeder, federvorgespannt in die verriegelte Stellung der Parksperre (10) an dem Gehäuse (4) abgestützt ist, insbesondere wobei, sofern rückbezogen auf einen der Ansprüche 1-6, die Sperrhülse (30) an ihrem der Sperrkontur (33) gegenüberliegenden Stirnseite über ein elastisches Element (34), vorzugsweise eine Tellerfeder oder eine Druckfeder, federvorgespannt in die verriegelte Stellung der Parksperre (10) an dem Gehäuse (4) abgestützt ist.

14. Parksperrensystem (1) nach einem der Ansprüche 7-13, **dadurch gekennzeichnet, dass** die Steuerscheibe (24) im Bereich einer ersten Stirnseite (24a) die Rampenkontur (29) mit mindestens einer Axialrampe, vorzugsweise einer Vielzahl von Axialrampen umfasst, die gleichmäßig über den Umfang der Stirnseite (24a) angeordnet sind.

15. Parksperrensystem (1') nach einem der Ansprüche 7-14, **dadurch gekennzeichnet, dass** die Verdrehsicherung und Axiallagerung der Sperrhülse (30') zwischen Bolzen (70) und radial am Grundkörper der Sperrhülse (30') angeformter Axialführungselemente (31e) gebildet ist.
